# DEMANDE DE BREVET EUROPEEN

(11) **EP 4 721 972 A1**
(43) Date de publication de la demande: **08.04.2026**
(21) Numéro de dépôt: 25205832.6
(22) Date de dépôt: 30.09.2025
(51) Int. Cl.: B32B 7/12, B32B 25/08, B32B 27/08, B32B 27/18, B32B 27/20, B32B 27/30, B32B 27/32

(54) **BÂCHE DE PROTECTION PLASTIQUE D'UNE SURFACE CONTRE LES POUSSIÈRES ET/OU LES PROJECTIONS D'AU MOINS UN FLUIDE, ET PROCÉDÉ DE FABRICATION D'UNE TELLE BÂCHE DE PROTECTION PLASTIQUE**

(30) Priorité: 01.10.2024 FR 2410556
(71) Demandeur: Multiplast, 43600 Sainte-Sigolene (FR)
(72) Inventeur: DUPONT, Jacques, 43600 SAINTE-SIGOLENE (FR)
(74) Mandataire: Cabinet Beau de Loménie

(57) **Abrégé**

La présente invention a pour objet une bâche de protection plastique (10) d'une surface comprenant une ou plusieurs (co)polyoléfines, dont la fraction massique est supérieure ou égale à 50%. Ladite bâche (10) comprend six sous-couches (40-90) comprenant chacune au moins une (co)polyoléfine, les première et sixième sous-couches (10,90) comprenant chacune au moins une charge minérale et éventuellement au moins un agent colorant, et les troisième et quatrième sous-couches (60,70) comprenant chacune au moins un agent adhésif polymérique. La bâche de protection plastique (10) a une épaisseur supérieure ou égale à 80 µm.

La présente invention a également pour objet un procédé de fabrication de ladite bâche de protection plastique (10).

## Description

### Domaine Technique

La présente invention a pour objet une bâche de protection d'une surface contre les poussières et/ou les projections d'au moins un fluide.

La présente invention a également pour objet un procédé de fabrication d'une bâche de protection d'une surface contre les poussières et/ou les projections d'au moins un fluide.

### Technique antérieure

Il est connu lors de la réalisation de travaux de construction, de rénovation ou d'extension, dans le domaine du bâtiment, de protéger les surfaces de la ou des pièce(s) en travaux ou de passage (par exemple les surfaces extérieures des meubles (canapés,...), des sols, des murs ou tout autre surface nécessitant une protection) des poussières et/ou des particules et/ou des liquides, tels que la projection de peinture, de graisse ou autre liquide, en disposant sur ces surfaces une bâche de protection.

La structure et la composition des bâches de protection sont déterminées selon les applications spécifiques desdites bâches. Ainsi, lorsqu'il est recherché que la bâche soit résistante à la déchirure, et se maintienne sur la surface à protéger, par exemple le sol, sans former de plis, et sans nécessairement mettre en œuvre un agent adhésif, ni glisser sur ladite surface, ce type de bâche comprend par exemple une couche en carton imperméabilisée selon l'une de ses faces par un film polymérique ou encore comprend un film polymérique renforcée par des fibres synthétiques ou un feutre nontissé. Ces bâches ont pour inconvénients qu'elles comprennent des matériaux de natures différentes et ne peuvent donc être recyclées pour fabriquer de nouvelles bâches. En outre, les bâches, notamment comprenant du carton ou un feutre, épousent moins bien les surfaces à protéger, et créent potentiellement des zones de pliure sources d'amorce à la déchirure.

FR 3.139.739 A1 a pour objet une bâche de protection plastique, comprenant trois couches, et ayant une première face adhérente sur la surface à protéger et une seconde face opposée non-adhérente sur la surface à protéger.

Or, il est recherché des bâches de protection plastiques dont les surfaces opposées ne sont pas adhérentes avec les surfaces à protéger.

CN 205.705.543 U concerne une bâche de protection comprenant des couches textiles et qui n'est donc pas une bâche plastique.

Il est ainsi recherché des bâches de protection plastiques qui épousent les surfaces à protéger, qui soient résistantes à la déchirure, qui ne forment pas de plis et soient aptes à se maintenir en position sans mettre œuvre un agent adhésif, et enfin dont la recyclabilité est améliorée.

On recherche également des bâches de protection plastiques résistantes à la déchirure, en particulier au piétinement durant la durée des travaux.

Il est enfin recherché des bâches de protection qui puissent être colorées afin d'identifier si une surface est effectivement protégée. En effet une bâche de protection transparente ou opaque ne permet pas d'identifier rapidement si une surface est correctement protégée. De plus, il peut être recherché de colorer la bâche de protection de manière différenciée afin d'attribuer une fonction spécifique à l'une de ses faces.

### Exposé de l'invention

La présente invention a pour objet, selon un premier aspect, une bâche de protection plastique d'une surface, ladite bâche est imperméable à l'eau, ladite bâche de protection plastique comprend une ou plusieurs (co)polyoléfines, le rapport de la masse totale de la ou desdites (co)polyoléfines sur la masse totale de ladite bâche de protection est supérieure ou égale à 50%, ladite bâche de protection a une première face et une seconde face, et ladite bâche de protection comprend, au moins, de sa première face vers sa seconde face, en particulier ladite bâche de protection est formée de:
- une première sous-couche comprenant au moins une (co)polyoléfine A et au moins une charge minérale, et éventuellement au moins un agent colorant ;
- une seconde sous-couche comprenant au moins une (co)polyoléfine B, et éventuellement au moins une charge minérale,
- une troisième sous-couche comprenant au moins une (co)polyoléfine C1, et éventuellement au moins agent adhésif polymérique C2,
- une quatrième sous-couche comprenant au moins une (co)polyoléfine D1, et éventuellement au moins un agent adhésif polymérique D2;
- une cinquième sous-couche comprenant au moins une (co)polyoléfine E, et éventuellement au moins une charge minérale,
- une sixième sous-couche comprenant au moins une (co)polyoléfine F et au moins une charge minérale, et éventuellement au moins un agent colorant,
- ladite bâche de protection ayant une épaisseur supérieure ou égale à 80 µm.

Avantageusement, la bâche de protection plastique comprend plusieurs sous-couches polymériques pouvant avoir des compositions différentes, et donc des fonctions différentes ce qui facilite la maitrise de la quantité de certains composants onéreux et gênants pour la recyclabilité, tel qu'un agent de coloration, ou encore impactant la fonction adhésive recherchée s'agissant de la charge minérale.

Avantageusement, la bâche de protection plastique comprend, notamment est formée de, six sous-couches polymériques ce qui lui confère une masse surfacique élevée, et ainsi un bon maintien sur les surfaces à protéger sans qu'un agent adhésif (ex : ruban adhésif) ne soit nécessaire.

Avantageusement, la bâche de protection plastique ne comprend pas de fibres, de couche textile, ou encore de couche en carton de sorte qu'elle est souple et épouse parfaitement les surfaces à protéger sans former de pli.

La bâche de protection plastique ne comprend de couche textile ou encore de couche en carton.

Avantageusement, les première et sixième sous-couches comprennent chacune au moins une charge minérale. Cette disposition permet de conférer aux surfaces externes des première et sixième sous-couches une propriété de non-adhérence aux surfaces à protéger.

Cette différenciation de la présence ou non d'une charge minérale entre les sous-couches permet d'attribuer une fonction de collage à certaines sous-couches puisque les charges minérales ne sont pas présentes dans toutes les sous-couches de la bâche, en particulier dans les troisième et quatrième sous-couches.

Avantageusement, les troisième et quatrième sous-couches ne comprennent pas de charge minérale.

Avantageusement, les première, seconde et troisième sous-couches sont coextrudées ensembles, et les quatrième, cinquième et sixième sous-couches sont coextrudées ensembles.

Cette disposition permettrait d'améliorer les propriétés mécaniques de la bâche de protection (résistance à la déchirure notamment) car les défauts potentiels lors de l'extrusion se répartissent, et donc se divisent, de manière aléatoire dans les différentes sous-couches extrudées et ne sont pas concentrées dans une seule sous-couche formant l'intégralité de la bâche de protection.

Avantageusement, les première et sixième sous-couches sont extrudées à partir de la même composition polymérique.

Avantageusement, les première et sixième sous-couches sont dans la même composition polymérique.

Avantageusement, les (co)polyoléfine(s) A et F sont identiques.

Avantageusement, les première et sixième sous-couches comprennent la ou les mêmes charge(s) minérale(s) et/ou le ou les mêmes agent(s) colorant(s).

Avantageusement, les deuxième et cinquième sous-couches sont extrudées à partir de la même composition polymérique.

Avantageusement, les deuxième et cinquième sous-couches sont dans la même composition polymérique.

Avantageusement, les (co)polyoléfine(s) B et E sont identiques.

Avantageusement, les troisième et quatrième sous-couches sont extrudées à partir de la même composition polymérique.

Avantageusement, les troisième et quatrième sous-couches sont dans la même composition polymérique.

Avantageusement, les (co)polyoléfine(s) C1 et D1 sont identiques.

Avantageusement, les agents adhésifs polymériques C2 et D2 sont identiques.

Les (co)polyoléfine(s) A, B, C1, D1, E, et F peuvent être différentes, ou identiques, de préférence elles sont identiques.

De préférence, la bâche de protection plastique est une gaine extrudée-soufflée et aplatie.

Avantageusement, la bâche de protection plastique, ou ladite gaine, comprend deux couches, tels que deux films, polymériques, collé(e)s entre-elles(eux).

En particulier, une première couche, ou premier film, polymérique, comprend, notamment est constitué(e) essentiellement, des première, seconde, et troisième sous-couches.

En particulier, une seconde couche, ou second film, polymérique, comprend, notamment est constitué(e) essentiellement, des quatrième, cinquième, et sixième sous-couches.

De préférence, ladite gaine comprend une zone, ou bord, inférieur(e) et une zone, ou bord, supérieur(e) entre lesquelles s'étend une direction longitudinale, et un premier bord, ou côté, latéral et un second bord, ou côté, latéral entre lesquels s'étend une direction transversale, en particulier ladite direction transversale est sensiblement perpendiculaire à la direction longitudinale.

Le premier bord, ou côté, latéral, et/ou le second bord, ou côté, latéral, peut/peuvent être coupé(s) selon la direction longitudinale de la gaine.

De préférence, la bâche de protection plastique comprend, ou les premier et second films polymériques comprennent respectivement, des première et seconde couches réunies, et thermocollées entre-elles par l'intermédiaire des troisième et quatrième sous-couches, en particulier par l'intermédiaire des faces internes des troisième et quatrième sous-couches entre-elles.

De préférence, les première et seconde couches sont sensiblement parallèles entre-elles.

De préférence, les première et seconde couches comprennent chacune une face interne, les faces internes desdites première et seconde couches étant en regard l'une de l'autre, en particulier correspondant aux faces internes respectivement des troisième et quatrième sous-couches.

Avantageusement, les troisième et quatrième sous-couches comprennent chacune au moins un élastomère thermoplastique comprenant des unités de répétition oléfiniques C2 ou D2 ce qui favorise l'adhérence/le collage desdites sous-couches entre-elles lorsqu'elles ne sont pas encore refroidies après leur extrusion, et donc à chaud en sortie de la filière d'extrusion-soufflage.

Avantageusement, les troisième et quatrième sous-couches ne comprennent pas de charge minérale. En effet, une charge minérale altérerait les propriétés d'adhérence des sous-couches entre-elles, et empêcherait la fonction de collage assurée par les élastomères thermoplastiques oléfiniques, notamment C1 et D1.

Avantageusement, les seconde et/ou troisième et/ou quatrième et/ou cinquième sous-couches ne comprend/ne comprennent pas (chacune) une charge minérale.

### Bâche de protection plastique

La bâche de protection plastique est de préférence stockée enroulée surelle-même autour d'un support, tel qu'un rouleau.

La bâche de protection plastique a de préférence une forme sensiblement rectangulaire ou carrée, avec une longueur supérieure ou égale à sa largeur. La bâche de protection plastique comprend des première et seconde faces correspondant respectivement à la face externe de la première sous-couche et à la face externe de la sixième sous-couche.

De préférence, la bâche de protection plastique comprend des première et seconde faces sensiblement planes et opposées.

Les première et seconde faces de la bâche de protection sont des faces non adhérentes à la surface à protéger.

La bâche de protection plastique comprend une direction longitudinale s'étendant entre ses bords supérieur et inférieure, et une direction transversale s'étendant entre ses premier et second bords latéraux, la direction transversale étant en particulier sensiblement perpendiculaire au sens longitudinal.

On comprend dans le présent texte par la bâche de protection plastique est imperméable à l'eau qu'elle ne se laisse pas traverser par l'eau, et notamment par les liquides (peintures, graisses, solvants,...), de sa première face vers sa seconde face.

Avantageusement, la bâche de protection plastique se présente sous forme d'un film principal monolithique.

Avantageusement, la fraction massique en (co)polymère(s) thermoplastique(s) dans la bâche de protection plastique est supérieure ou égale à 50%, de préférence supérieure ou égale à 65%.

De préférence, la bâche de protection pastique a une masse surfacique supérieure ou égale à 100 g/m², encore de préférence supérieure ou égale à 150g/m², préférentiellement supérieure ou égale à 200 g/m².

De préférence, la bâche de protection plastique a une masse surfacique inférieure ou égale à 400 g/m², encore de préférence inférieure ou égale à 350 g/m², préférentiellement inférieure ou égale à 300 g/m², par exemple de 250 g/m² à +/- 30 g/m².

De préférence, la bâche de protection pastique a une épaisseur supérieure ou égale à 100 µm, encore de préférence supérieure ou égale à 150 µm, préférentiellement supérieure ou égale à 200 µm, par exemple de 230 µm à +/- 30 µm.

De préférence, la bâche de protection plastique a une épaisseur inférieure ou égale à 400 µm, encore de préférence inférieure ou égale à 350 µm, préférentiellement inférieure ou égale à 300 µm.

Avantageusement, le rapport de la masse totale en (co)polyoléfine(s), et éventuellement en élastomère(s) thermoplastique(s) comprenant des unités de répétition oléfiniques C2 ou D2 ou en agent(s) adhésif(s) polymérique(s), sur la masse totale de la bâche de protection est supérieur ou égal à 50%, de préférence supérieur ou égal à 60%, encore de préférence supérieur ou égal à 65%.

Avantageusement, le rapport de la masse totale en (co)polyoléfine(s), et éventuellement en élastomère(s) thermoplastique(s) comprenant des unités de répétition oléfiniques C2 ou D2 ou en agent(s) adhésif(s) polymérique(s), sur la masse totale de la bâche de protection est inférieur ou égal à 90%, de préférence inférieur ou égal à 80%, encore de préférence inférieur ou égal à 75%.

Avantageusement, le rapport de la masse totale en élastomère(s) thermoplastique(s) comprenant des unités de répétition oléfiniques dont les élastomères C2 et D2 ou agent(s) adhésif(s) polymérique(s), sur la masse totale de la bâche de protection est supérieur ou égal à 0,5%, de préférence supérieur ou égal à 1%, encore de préférence supérieur ou égal à 2%, par exemple de 2,5% à +/- 1,5% près.

Avantageusement, le rapport de la masse totale en agent(s) adhésif(s) polymérique(s), notamment en élastomère(s) thermoplastique(s) comprenant des unités de répétition oléfiniques dont les élastomères C2 et D2, sur la masse totale de la bâche de protection est inférieur ou égal à 40%, de préférence inférieur ou égal à 30%, encore de préférence inférieur ou égal à 20%, préférentiellement inférieur ou égal à 10%.

Avantageusement, le rapport de la masse totale en charge(s) minérale(s) sur la masse totale de la bâche de protection est supérieur ou égal à 5%, de préférence supérieur ou égal à 10%, encore de préférence supérieur ou égal à 20%, préférentiellement supérieur ou égal à 25%, par exemple de 28,5% à +/- 5% près.

Avantageusement, le rapport de la masse totale en charge(s) minérale(s) sur la masse totale de la bâche de protection est inférieur ou égal à 45%, de préférence inférieur ou égal à 40%, encore de préférence inférieur ou égal à 35%, préférentiellement inférieur ou égal à 30%.

Avantageusement, le rapport de la masse totale en agent(s) colorant(s) sur la masse totale de la bâche de protection est supérieur ou égal à 1%, de préférence supérieur ou égal à 2%, par exemple de 3% à +/- 2% près.

Avantageusement, le rapport de la masse totale en agent(s) colorant(s) sur la masse totale de la bâche de protection est inférieur ou égal à 20%, de préférence inférieur ou égal à 15%, encore de préférence inférieur ou égal à 10%, préférentiellement inférieur ou égal à 6%.

Avantageusement, le ou les agent(s) colorant(s) est/sont disposé(s) uniquement dans les première et sixième sous-couches. Ainsi, leurs fractions massiques dans ces sous-couches sont renforcées ainsi que la couleur en résultant. Les agents colorants sont en effet des composés onéreux, cette disposition permet d'optimiser le coût de la bâche de protection tout en obtenant une coloration des surfaces extérieures des première et sixième sous-couches efficace. De plus, la quantité en agents colorants étant optimisés, cela facilite le recyclage de la bâche de protection puisque la quantité d'agents colorants par rapport à la masse totale de la bâche est faible et impactera moins la coloration de la bâche recyclée.

Les couleurs de préférence mises en œuvre pour la bâche de protection sont le noir et le blanc, le blanc étant préféré par exemple pour effectuer des travaux de peinture afin que la coloration de la bâche de protection n'interfère pas avec le rendu final pour le peintre.

Le rapport de la masse totale de la ou desdites (co)polyoléfines (en particulier comprenant également le ou les agent(s) adhésif(s) polymérique(s)) sur la masse totale de ladite bâche de protection est supérieure ou égale à 50%, de préférence supérieure ou égale à 60%, encore de préférence supérieure ou égale à 65%.

Avantageusement, les première, seconde, troisième, quatrième, cinquième et sixième sous-couches sont co-extensives selon toutes leurs surfaces.

Avantageusement, la bâche de protection a une résistance à la rupture supérieure ou égale à 30 N, notamment supérieure ou égale à 45N, dans la direction longitudinale L.

Avantageusement, la bâche de protection a une résistance à la rupture supérieure ou égale à 20N, notamment supérieure ou égale à 35N, dans la direction transversale T.

Avantageusement, la bâche de protection a un module d'élasticité (MPa) supérieur ou égal à 150N dans la ou les directions longitudinale et/ou transversale (L,T).

Avantageusement, la bâche de protection a un allongement à rupture supérieur ou égal à 250% dans la direction longitudinale L.

Avantageusement, la bâche de protection a un allongement à rupture supérieur ou égal à 450% dans la direction transversale T.

Les valeurs mécaniques ont été déterminées avec le norme ISO 527-1 et ISO 527-2, datant de 2019 « Plastiques - Détermination des propriétés en traction».

### Première sous-couche et/ou sixième sous-couche

De préférence, la fraction massique en (co)polyoléfine(s) dont la (co)polyoléfine A dans ladite première sous-couche, ou la fraction massique en (co)polyoléfine(s) dont la (co)polyoléfine F dans ladite sixième sous-couche, est supérieure ou égale à 40%, encore de préférence supérieure ou égale à 50%.

De préférence, la fraction massique en (co)polyoléfine(s) dont la (co)polyoléfine A dans ladite première sous-couche, ou la fraction massique en (co)polyoléfine(s) dont la (co)polyoléfine F dans ladite sixième sous-couche, est inférieure ou égale à 80%, encore de préférence inférieure ou égale à 70%, préférentiellement inférieure ou égale à 60%.

De préférence, la fraction massique en charge(s) minérale(s) dans la première sous-couche, ou dans la sixième sous-couche, est supérieure ou égale à 10%, encore de préférence supérieure ou égale à 20%, préférentiellement supérieure ou égale à 25%, encore plus préférentiellement supérieure ou égale à 30%, par exemple de 35% à +/-3% près.

De préférence, la fraction massique en charge(s) minérale(s) dans la première sous-couche, ou dans la sixième sous-couche, est inférieure ou égale à 70%, encore de préférence inférieure ou égale à 60%, préférentiellement inférieure ou égale à 50%, encore plus préférentiellement inférieure ou égal à 45%, notamment inférieure ou égale à 40%.

De préférence, la fraction massique en agent(s) colorant(s) dans la première sous-couche, ou dans la sixième sous-couche, est supérieure ou égale à 1%, encore de préférence supérieure ou égale à 5%.

De préférence, la fraction massique en agent(s) colorant(s) dans la première sous-couche, ou dans la sixième sous-couche, est inférieure ou égale à 30%, encore de préférence inférieure ou égale à 20%, préférentiellement inférieure ou égale à 15%, par exemple de 10% à +/-3% près.

### Seconde sous-couche et/ou cinquième sous-couche

De préférence, la fraction massique en (co)polyoléfine(s) dont la (co)polyoléfine B dans ladite seconde sous-couche, ou la fraction massique en (co)polyoléfine(s) dont la (co)polyoléfine E dans ladite cinquième sous-couche, est supérieure ou égale à 40%, encore de préférence supérieure ou égale à 50%, préférentiellement supérieure ou égale à 60%, encore préférentiellement supérieure ou égale à 65%, par exemple de 70% à +/-3% près.

De préférence, la fraction massique en (co)polyoléfine(s) dont la (co)polyoléfine B dans ladite seconde sous-couche, ou la fraction massique en (co)polyoléfine(s) dont la (co)polyoléfine E dans ladite cinquième sous-couche, est inférieure ou égale à 90%, encore de préférence inférieure ou égale à 80%.

La fraction massique en charge(s) minérale(s) dans la seconde sous-couche, ou dans la cinquième sous-couche, est supérieure ou égale à 10%, de préférence supérieure ou égale à 20%, encore de préférence supérieure ou égale à 25%, par exemple de 30% à +/- 3% près.

La fraction massique en charge(s) minérale(s) dans la seconde sous-couche, ou dans la cinquième sous-couche, est inférieure ou égale à 70%, de préférence inférieure ou égale à 60%, encore de préférence inférieure ou égale à 50%, préférentiellement inférieure ou égal à 45%, notamment inférieure ou égale à 40%.

De préférence, la seconde sous-couche ne comprend pas d'agent colorant.

### Troisième sous-couche et/ou quatrième sous-couche

De préférence, la fraction massique en (co)polyoléfine(s) dont la (co)polyoléfine C1 dans ladite troisième sous-couche, ou la fraction massique en (co)polyoléfine(s) dont la (co)polyoléfine D1 dans ladite quatrième sous-couche, est supérieure ou égale à 40%, encore de préférence supérieure ou égale à 50%, préférentiellement supérieure ou égale à 60%, encore préférentiellement supérieure ou égale à 65%, par exemple de 75% à +/- 5% près.

De préférence, la fraction massique en (co)polyoléfine(s) dont la (co)polyoléfine C1 dans ladite troisième sous-couche, ou la fraction massique en (co)polyoléfine(s) dont la (co)polyoléfine D1 dans ladite quatrième sous-couche, est inférieure ou égale à 90%, encore de préférence inférieure ou égale à 80%.

De préférence, la fraction massique en agent(s) adhésif(s) polymérique(s) dont l'agent adhésif polymérique C2 dans ladite troisième sous-couche, ou la fraction massique en agent(s) adhésif(s) polymérique(s) dont l'agent adhésif polymérique D2 dans ladite quatrième sous-couche, est supérieure ou égale à 5%, encore de préférence supérieure ou égale à 10%, préférentiellement supérieure ou égale à 15%, encore préférentiellement supérieure ou égale à 20%, par exemple de 25% à +/- 5% près.

De préférence, la fraction massique en agent(s) adhésif(s) polymérique(s) dont l'agent adhésif polymérique C2 dans ladite troisième sous-couche, ou la fraction massique en agent(s) adhésif(s) polymérique(s) dont l'agent adhésif polymérique D2 dans ladite quatrième sous-couche, est inférieure ou égale à 70%, encore de préférence inférieure ou égale à 60%, préférentiellement inférieure ou égale à 50%, encore préférentiellement inférieure ou égale à 40%, notamment inférieure ou égale à 35%.

De préférence, la troisième sous-couche et/ou la quatrième sous-couche ne comprend/ne comprennent pas d'agent colorant.

De préférence, la troisième sous-couche et/ou la quatrième sous-couche ne comprend/ne comprennent pas de charge minérale.

### Agent adhésif polymérique

L'agent adhésif polymérique C2 peut être identique ou différent de l'agent adhésif polymérique D2, de préférence ils sont identiques.

L'agent adhésif polymérique C2 et/ou l'agent adhésif polymérique D2, et éventuellement tout autre agent adhésif polymérique mis en œuvre dans la bâche de protection, est/sont un (co)polymère comprenant des unités de répétition oléfiniques, tels que d'éthylène et/ou de propylène, avec éventuellement des fonctions anhydrides maléiques greffées et/ou des fonctions acrylates greffées et/ou des unités de répétition acrylates, ou un mélange de ces dernières.

L'agent adhésif polymérique C2 et/ou l'agent adhésif polymérique D2, et éventuellement tout autre agent adhésif polymérique mis en œuvre dans la bâche de protection, est/sont thermofusibles, en particulier thermofondus dans au moins une étape, notamment une étape d'extrusion-soufflage, du procédé de fabrication de la bâche de protection selon l'invention. L'agent adhésif polymérique C2 et/ou l'agent adhésif polymérique D2, et éventuellement tout autre agent adhésif polymérique mis en œuvre dans la bâche de protection est/sont choisi(s) parmi : les élastomères thermoplastiques oléfiniques, en particulier comprenant des unités de répétition de propylène ou d'éthylène ou un mélange de ces derniers, tel qu'un élastomère à base de propylène ; les copolymères d'éthylène et d'acétate de vinyle, tel que l'EVA ; les (co)polyoléfines greffées avec des fonctions anhydrides maléiques réactives, tel que le polyéthylène greffé avec l'anhydride maléique (ex : MAH-g-LLDPE) ; les (co)polymères d'oléfines et d'acrylates, tels que des copolymères d'éthylène et d'acrylate ; ou un mélange de ces derniers.

De préférence, l'agent adhésif polymérique, notamment C2 et/ou D2, a une température de fusion supérieure ou égale à 80°C.

De préférence, l'agent adhésif polymérique, notamment C2 et/ou D2, a une température de fusion inférieure ou égale à 150°C.

Dans un mode de réalisation, le ou lesdits agent(s) adhésif(s) polymérique(s) dont l'agent adhésif polymérique C2 et/ou l'agent adhésif polymérique D2, en particulier le ou les élastomère(s) thermoplastique(s) oléfinique(s) cité(s) dans le présent texte, est/sont choisi(s) parmi :
- les polyisobutylènes (PIB) ; et/ou
- les terpolymères d'éthylène, de propylène, et de diène (EPDM); les copolymères d'éthylène et de propylène ; les copolymères d'éthylène et d'alpha-oléfine(s), par exemple les copolymères d'éthylène et de butène ou les copolymères d'éthylène et d'octène, et un mélange de ces derniers ; de préférence l'EPDM et les copolymères d'éthylène et de propylène ; et/ou
- les mélanges d'une polyoléfine, en particulier du polypropylène, avec un ou des élastomère(s) thermoplastique(s) oléfinique(s), en particulier non vulcanisé(s), et éventuellement un ou des plastifiants (par exemple huile(s) minérale(s) ou naphténique(s) ou paraffinique(s)), le ou lesdits élastomère(s) thermoplastique(s) oléfinique(s) peut/peuvent être les copolymères d'éthylène et de propylène, les terpolymères d'éthylène, de propylène et de diène, les copolymères d'éthylène et d'alpha-oléfine(s) (par exemple les copolymères d'éthylène et de butène ou les copolymères d'éthylène et d'octène).

Dans un mode de réalisation, un agent adhésif polymérique dont l'agent adhésif polymérique C2 et/ou l'agent adhésif polymérique D2, (par exemple un élastomère thermoplastique d'éthylène et/ou de propylène) a/ont (chacun) au moins l'une des propriétés suivantes :
- une densité supérieure ou égale à 0,800 et inférieure ou égale à 0,930 (g/cm³, par exemple mesurée avec la norme ASTM D1505-18), de préférence supérieure ou égale à 0,840 et inférieure ou égale à 0,920, encore de préférence supérieure ou égale à 0,850 et inférieure ou égale à 0,900 ; et/ou
- une dureté Shore A (par exemple mesurée à l'aide de la norme ASTM D2240, 15 sec, à 23°C) supérieure ou égale à 40 et inférieure ou égale à 80, de préférence supérieure ou égale à 50 et inférieure ou égale à 80, encore de préférence supérieure ou égale à 60 et inférieure ou égale à 75 ; et/ou

- un module en flexion supérieur ou égal à 2 MPa, (par exemple mesuré avec la norme ASTM D790, à 23°C, à 1% sécant), de préférence supérieur ou égal à 5 MPa, encore de préférence supérieur ou égal à 8 MPa, et éventuellement inférieur ou égal à 15 MPa; et/ou
- un indice de fluidité à chaud (IFC) supérieur ou égal à 1 g/10min et inférieur ou égal à 10 g/10 min, de préférence supérieur ou égal à 2g/10 min et inférieur ou égal à 7 g/10min, encore de préférence inférieur ou égal à 5 g/10 min (notamment mesuré à 230°C pour 2,16 Kg) ; et/ou
- une fraction massique en éthylène supérieure ou égale à 5%, de préférence supérieure ou égale à 10%, et éventuellement inférieure ou égale à 30%, ou encore inférieure ou égale à 20% ; et/ou
- une force à rupture (mesurée à 23°C) supérieure ou égale à 5 MPa et inférieure ou égale à 30 MPa, de préférence inférieure ou égale à 20 MPa, encore de préférence inférieure ou égale à 15 MPa, préférentiellement supérieure ou égale à 10 MPa ; et/ou
- un allongement à rupture (mesuré à 23°C) supérieur ou égal à 400%, de préférence supérieur ou égal à 500%, encore de préférence supérieur ou égal à 600%, préférentiellement supérieur ou égal à 700%, en particulier supérieur ou égal à 800%, plus particulièrement inférieur ou égal à 2000%, notamment inférieur ou égal à 1500% ou à 1000% ; et/ou
- une température de ramollissement Vicat supérieure ou égale à 45°C, et éventuellement inférieure ou égale à 110°C. La fraction massique en éthylène est de préférence mesurée avec la norme ASTM D3900-17 (2021). La force à rupture et l'allongement à rupture sont de préférence mesurés avec la norme ASTM D412-16(2021).

La température de ramollissement Vicat est de préférence mesurée avec la norme ASTM D1525-17E01.

La densité (g/cm³) dans le présent texte est de préférence mesurée à l'aide de la norme ASTM D1505-18 intitulée « Méthode d'essai standard pour la densité des plastiques par une technique de gradient de densité » ou encore à l'aide de la norme ASTM D792-20 intitulée « Méthodes d'essai standard pour la densité et la gravité spécifique (densité relative) des plastiques par déplacement ».

L'agent adhésif polymérique C2 ou D2 peut ainsi être choisi dans la gamme des élastomères Vistamaxx^{R} commercialisé par ExxonMobil Chemical, ou encore dans la gamme des polyoléfines greffées Orevac^{R} commercialisés par SK functional polymer, ou encore dans la gamme des copolymères d'éthylène et d'acrylate Lotryl^{R} commercialisés par SK functional polymer.

### (co)polyoléfines, notamment (co)polyoléfines A et/ou B et/ou C1 et/ou D1 et/ou E et/ou F

Ladite bâche de protection plastique comprend une ou plusieurs (co)polyoléfines, en particulier un ou plusieurs (co)polymère(s) de propylène et/ou d'éthylène, de préférence un ou plusieurs (co)polymère(s) d'éthylène.

Les (co)polymère(s) A et/ou B et/ou C1 et/ou D1 et/ou E et/ou F est/sont un ou des (co)polymère(s) de propylène et/ou d'éthylène, de préférence un ou plusieurs (co)polymère(s) d'éthylène, encore de préférence un ou des polyéthylène(s).

On comprend dans le présent texte par (co)polymère d'éthylène, par exemple indifféremment le (co)polymère d'éthylène A et/ou B et/ou C1 et/ou D1 et/ou E et/ou F, un polymère comprenant un motif de répétition éthylénique et éventuellement un ou plusieurs autre(s) motif(s) de répétition différent(s) du motif de répétition éthylénique, de préférence choisi parmi les motifs de répétition d'alpha-oléfines ; il peut s'agir d'un polyéthylène, en particulier d'un homopolymère de polyéthylène.

Les motifs de répétition d'alpha-oléfines peuvent être ou sont dérivés du 1-hexene, 4-méthyl-1-pentene, 1-octène et 1-decène et/ou peuvent être ou sont dérivés des alcènes comprenant de 3 à 10 atomes de carbone.

La bâche de protection comprend, ou le (co)polymère d'éthylène A et/ou B et/ou C1 et/ou D1 et/ou E et/ou F est/sont (chacun), un ou des polyéthylène(s) de basse densité et/ou un ou des polyéthylène(s) de basse densité linéaire(s).

Dans un mode de réalisation, le (co)polymère d'éthylène A et/ou B et/ou C1 et/ou D1 et/ou E et/ou F est/sont chacun un (co)polymère d'éthylène ayant une densité (g/cm³, par exemple mesurée à l'aide de la norme DIN 53479) supérieure ou égale 0,90, de préférence supérieure ou égale à 0,92.

Dans un mode de réalisation, le (co)polymère d'éthylène A et/ou B et/ou C1 et/ou D1 et/ou E et/ou F est/sont chacun un (co)polymère d'éthylène ayant une densité (g/cm³, par exemple mesurée à l'aide de la norme DIN 53479) inférieure ou égale à 0,96 ; de préférence inférieure ou égale à 0,95, encore de préférence inférieure ou égale à 0,94.

Dans un mode de réalisation, le (co)polymère d'éthylène A et/ou B et/ou C1 et/ou D1 et/ou E et/ou F est/sont chacun un (co)polymère d'éthylène ayant un Indice de Fluidité à Chaud (IFC) supérieur ou égal à 0,50 g/10 min et inférieur ou égal à 2 g/10 min, de préférence supérieur ou égal à 0,70 g/10 min et inférieur ou égal à 1,5 g/10min (de préférence à 190°C pour 2,16 Kg).

Dans un mode de réalisation, la bâche de protection plastique a un Indice de Fluidité à Chaud (IFC) supérieur ou égal à 0,50 g/10 min et inférieur ou égal à 2,5 g/10 min, de préférence supérieur ou égal à 0,70 g/10 min et inférieur ou égal à 1,5 g/10min (de préférence à 190°C pour 2,16 Kg). L'IFC (g/10 min) désigné dans le présent texte est de préférence mesuré avec la norme NF EN ISO 1133-1 (juillet 2022) intitulée « Plastiques - Détermination de l'indice de fluidité à chaud des thermoplastiques, en masse (MFR) et en volume (MVR) - Partie 1 : méthode normale ».

La ou les (co)polyoléfine(s) peut/peuvent être biosourcée(s) et/ou pétrosourcée(s), ou encore un mélange de (co)polyoléfine(s) biosourcée(s) et de (co)polyoléfine(s) pétrosourcée(s).

### Charge(s) minérale(s)

De préférence, la ou les charge(s) minérale(s) est/sont choisie(s) parmi : le carbonate de calcium ; le talc ; la silice, par exemple la silice pyrogénée ou la silice fumée ; le kaolin ; le métakaolin ; le mica ; la craie ; le sulfate de baryum ; le dioxyde de titane, ou un mélange de ces derniers, de préférence la charge minérale est le carbonate de calcium.

De préférence, lorsque l'agent colorant et la charge minérale sont le dioxyde de titane, les fractions massiques en agent colorant et en charge minérale définies dans le présent texte se cumulent pour donner la quantité en TiO₂. Dans un exemple préféré, la ou les charge(s) minérale(s) est/sont sous forme de particules, notamment de poudre, en particulier dispersée dans une ou plusieurs des sous-couches, en particulier dans la première sous-couche, et dans la sixième sous-couche. Dans un exemple préféré, la ou les charge(s) minérale(s) est/sont des particules fines ayant une taille inférieure ou égale à 500 µm, de préférence inférieure ou égale à 250 µm, encore de préférence inférieure ou égale à 100 µm, par exemple inférieure ou égale 60 µm.

Avantageusement, la ou lesdites charge(s) minérale(s) permet/permettent que la bâche de protection soit non-glissante et non tackante.

### Agent(s) colorant(s)

Le ou les agent(s) colorant(s) peut/peuvent être tout agent compatible avec des (co)polyoléfines dans un procédé d'extrusion et apte(s) à attribuer une couleur déterminée.

Le ou les agent(s) colorant(s) peut/peuvent être ainsi le dioxyde de titane, ou le noir de carbone.

Le dioxyde de titane est préféré lorsque la bâche de protection plastique est destinée à protéger des surfaces intérieures.

Le noir de carbone est préféré lorsque la bâche de protection plastique est destinée à protéger des surfaces extérieures.

### Définitions

On comprend dans le présent texte par thermoplastique, tout (co)polymère (dont les élastomères) ou composant thermofusible, en particulier ayant une température de ramollissement ou de fusion supérieure ou égale à 80°C et inférieure ou égale à 300°C, plus particulièrement inférieure ou égale à 280°C, plus particulièrement inférieure ou égale à 260°C.

On comprend dans le présent texte par (co)polymère tout polymère comprenant au moins deux unités de répétition différentes, en particulier comprenant les copolymères et les terpolymères.

On comprend dans le présent texte par agent adhésif polymérique tout agent adhésif comprenant plusieurs unités de répétition, en particulier au moins 10 unités de répétition, plus particulièrement au moins 50 unités de répétition.

On comprend dans le présent texte par agent adhésif polymérique, tout (co)polymère configuré pour adhérer/coller avec une (co)polyoléfine, en particulier dans un état à chaud, c'est-à-dire en sortie d'une étape d'extrusion-soufflage de la bâche de protection plastique.

Dans une variante de réalisation, les (co)polyoléfines A, B, C1, D1 et E sont des (co)polyéthylènes, notamment des (co)polyéthylènes de basse densité. Avantageusement, les polyéthylènes offrent de bonnes propriétés mécaniques, notamment de résistance à la déchirure et à l'abrasion.

Dans une variante de réalisation, le rapport de la masse totale en (co)polyéthylène(s), notamment en (co)polyéthylène(s) de basse densité, sur la masse totale de ladite bâche de protection plastique, est supérieur ou égal à 50%, de préférence supérieur ou égal à 60%.

Dans une variante de réalisation, l'agent adhésif polymérique C2 et/ou l'agent adhésif polymérique D2 est/sont choisi(s) parmi : les élastomères thermoplastiques oléfiniques, en particulier les élastomères à base de propylène ou d'éthylène ou d'un mélange de ces derniers; les (co)polymères d'acétate de vinyle, tel que le copolymère d'éthylène et d'acétate de vinyle ; les (co)polyoléfines greffées avec des anhydrides maléiques réactifs, tel que les polyéthylènes greffés avec des anhydrides maléiques réactifs ; les copolymères d'oléfine(s) et d'acrylate(s), tel que le copolymère d'éthylène et d'acrylate ; ou un mélange de ces derniers.

Les inventeurs ont trouvé que ces agents adhésifs sont compatibles avec les (co)polyoléfines, en particulier les polyéthylènes, dans un procédé d'extrusion soufflage, et favorisent l'adhérence entre deux sous-couches comprenant lesdits agents adhésifs lorsque la gaine extrudée soufflée est aplatie.

Dans une variante de réalisation, le rapport de la masse totale en agent(s) adhésif(s) polymérique(s) comprenant le ou les agent(s) adhésif(s) C2 et/ou D2, sur la masse totale de ladite bâche de protection plastique est supérieur à 0% et inférieur ou égal à 15%, par exemple de l'ordre de 10% à +/- 3% près.

Avantageusement, la bâche de protection plastique comprend peu d'agents adhésifs, ces derniers étant disposés dans les troisième et quatrième sous-couches pour les coller entre-elles.

Dans une variante de réalisation, le rapport de la masse totale en charge(s) minérale(s) dans ladite bâche de protection plastique sur la masse totale de ladite bâche de protection plastique est supérieur à 0% et inférieur ou égal à 50%, de préférence supérieur ou égal à 15% et inférieur ou égal à 40%, en particulier supérieur ou égal à 20%, plus particulièrement supérieur ou égal à 25%.

La quantité de charge(s) minérale(s) est optimisée afin de conférer de bonnes propriétés mécaniques à la bâche avec un cout de revient acceptable.

Avantageusement, les troisième et quatrième sous-couches ne comprennent pas de charge(s) minérale(s).

Dans une variante de réalisation, le rapport de la masse totale des troisième et quatrième sous-couches sur la masse totale de la bâche de protection plastique est inférieur ou égal à 20%, de préférence inférieur ou égal à 15%.

De préférence, le rapport de la masse totale des troisième et quatrième sous-couches sur la masse totale de la bâche de protection plastique est supérieur ou égal à 5%, par exemple de 10% à +/- 3% près.

Ces sous-couches ont pour fonction de coller les deux plis ou couches de la gaine aplatie en sortie de l'étape d'extrusion-soufflage.

Dans une variante de réalisation, le rapport de la masse totale des deuxième et cinquième sous-couches sur la masse totale de ladite bâche de protection plastique est supérieur ou égal à 40%, de préférence supérieure ou égale à 50%, encore de préférence supérieure ou égale à 55%, par exemple de 60% à +/- 5% près.

Avantageusement, les deuxième et cinquième sous-couches sont les sous-couches les plus importantes en terme de masse dans la bâche de protection et assurent ainsi les fonctions mécaniques principales, sans comprendre d'agent colorant et/ou d'agent adhésif.

Dans une variante de réalisation, le rapport de la masse totale des première et sixième sous-couches sur la masse totale de la bâche de protection plastique est supérieur ou égal à 15%, de préférence supérieur ou égal à 20%, encore de préférence inférieur ou égal à 50%, encore de préférence inférieure ou égale à 40%, préférentiellement inférieure ou égale à 35%, par exemple de l'ordre de 30% à +/- 5% près.

Avantageusement, ces sous-couches permettent d'assurer une fonction anti-glissement sur la surface à protéger aux surfaces extérieures desdites sous-couches, et éventuellement d'attribuer une fonction spécifique de coloration indépendamment des autres sous-couches.

Dans une variante de réalisation, la bâche de protection plastique comprend des première et seconde couches plastiques thermocollées, la première couche plastique comprenant les première, seconde et troisième sous-couches qui sont co-extrudées, et la seconde couche plastique comprenant les quatrième, cinquième, et sixième sous-couches qui sont coextrudées.

Avantageusement, la bâche protection est une gaine extrudée-soufflée comprenant des première et seconde couches réunies ensembles et correspondant chacune à une moitié longitudinale de la gaine.

La gaine adhère sur elle-même sans agent de collage exogène par l'intermédiaire du ou des agent(s) adhésif(s) présent(s) dans les troisième et quatrième sous-couches formant la surface intérieure de la gaine avant son aplatissement.

Dans une variante de réalisation, les fractions massiques des différentes sous-couches dans la bâche de protection plastique sont :
- la fraction massique de la première sous-couche est comprise entre 5% et 25%,
- la fraction massique de la seconde sous-couche est comprise entre 20% et 40%,
- la fraction massique de la troisième sous-couche est comprise entre 1% et 10%,
- la fraction massique de la quatrième sous-couche est comprise entre 1% et 10%,
- la fraction massique de la cinquième sous-couche est comprise entre 20% et 40%,
- la fraction massique de la sixième sous-couche est comprise entre 5% et 25%.

Ces différentes fractions massiques sont préférées pour obtenir une bâche de protection satisfaisant les propriétés mécaniques recherchées de résistance à la déchirure, de maintien en place sur la surface à protéger, de coloration éventuelle de ses première et seconde faces, et enfin de collage de la gaine sur elle-même.

Dans une variante de réalisation, ladite bâche de protection plastique a une épaisseur supérieure ou égale à 200 µm, et de préférence une masse surfacique supérieure ou égale à 200 g/m².

Dans un exemple préféré, la bâche de protection plastique a une masse surfacique de 250 g/m² à +/- 50 g/m² et une épaisseur de 230 µm à +/-50 µm.

Dans une variante de réalisation, le rapport de la masse totale en polyéthylène(s) ayant une densité supérieure ou égale à 0,900 et inférieure ou égale à 0,950 sur la masse totale de ladite bâche de protection plastique est supérieur ou égal à 60%. La présente invention a pour objet, selon un deuxième aspect, l'utilisation d'une bâche de protection plastique selon l'une quelconque des variantes de réalisation en référence au premier aspect de l'invention dans un procédé de fabrication d'une nouvelle bâche de protection plastique d'une surface comprenant au moins 50% en masse d'une ou plusieurs (co)polyoléfine(s), ledit procédé comprenant une étape d'extrusion-soufflage d'un mélange comprenant une ou plusieurs bâche(s) de protection plastique(s) selon l'une quelconque des variantes de réalisation en référence au premier aspect de l'invention.

La ou les (co)polyoléfine(s) peut/peuvent être telle(s) que décrite(s) en référence au premier aspect de l'invention. La présente invention a pour objet, selon un troisième aspect, l'utilisation d'une bâche de protection plastique selon l'une quelconque des variantes de réalisation en référence au premier aspect de l'invention, pour la protection, notamment amovible, d'une surface contre les poussières et/ou les projections d'au moins un fluide.

La présente invention a pour objet, selon un quatrième aspect, un procédé de fabrication d'une bâche de protection plastique d'une surface, notamment selon l'une quelconque des variantes de réalisation en référence au premier aspect de l'invention.

Avantageusement, ledit procédé comprend :
- une étape d'extrusion-soufflage d'une gaine comprenant des première et seconde couches,
- une étape de thermocollage desdites première et secondes couches de la gaine entre-elles, en particulier ladite étape de thermocollage comprend une étape de mise à plat de la gaine, en sorte de former une bâche de protection plastique.

Avantageusement, ladite bâche de protection plastique est imperméable à l'eau et a une première face et une seconde face, ladite bâche de protection plastique comprend une ou plusieurs (co)polyoléfines, le rapport de la masse totale de la ou desdites (co)polyoléfines sur la masse totale de ladite bâche de protection est supérieure ou égale à 50%, et ladite bâche de protection comprend, au moins, de sa première face vers sa seconde face:
- ladite première couche comprenant :
- une première sous-couche comprenant au moins une (co)polyoléfine A et au moins une charge minérale, et éventuellement au moins un agent colorant ;
- une seconde sous-couche comprenant au moins une (co)polyoléfine B, et éventuellement au moins une charge minérale,
- une troisième sous-couche comprenant au moins une (co)polyoléfine C1, et au moins un agent adhésif polymérique C2, et ladite seconde couche comprenant :
- une quatrième sous-couche comprenant au moins une (co)polyoléfine D1, et au moins un agent adhésif polymérique D2;
- une cinquième sous-couche comprenant au moins une (co)polyoléfine E, et éventuellement au moins une charge minérale,
- une sixième sous-couche comprenant au moins une (co)polyoléfine F et au moins une charge minérale, et éventuellement au moins un agent colorant,
- et ladite bâche de protection a une épaisseur supérieure ou égale à 80 µm.

Avantageusement, l'épaisseur et ainsi la masse surfacique de la bâche de protection sont optimisées sans que deux couches soient collées entre-elles dans une étape supplémentaire à leur procédé de fabrication par extrusion. Avantageusement, l'étape d'extrusion-soufflage comprend la co-extrusion d'au moins trois mélanges à travers une filière creuse et annulaire en sorte d'extruder une gaine (donc implicitement creuse) comprenant les trois mélanges coextrudées en parallèle en sorte de former trois strates ou trois sous-couches annulaires.

Avantageusement, l'étape d'extrusion-soufflage comprend l'envoi d'air dans le volume intérieur de la filière en sorte de former un ballon, c'est-à-dire la gaine extrudée-soufflée.

Avantageusement, l'air est emmagasiné entre la tête de sortie de l'extrudeuse et l'extrémité distale de la gaine, la gaine étant aplatie au niveau de son extrémité distale.

Avantageusement, les première et sixième sous-couches forment une première strate ou sous-couche annulaire.

Avantageusement, les deuxième et cinquième sous-couches forment une seconde strate ou sous-couche annulaire.

Avantageusement, les troisième et quatrième sous-couches forment une troisième strate ou sous-couche annulaire.

Avantageusement, le premier mélange correspond aux première et sixième sous-couches, le second mélange correspond aux deuxième et cinquième sous-couches, et le troisième mélange correspond aux troisième et quatrième sous-couches.

Avantageusement, en sortie de l'étape d'extrusion soufflage, la gaine extrudée-soufflée est maintenue en tension entre des zones supérieure et inférieure, cet étirage longitudinal aplatie la gaine en sorte que les troisième et quatrième sous-couches viennent en contact l'une de l'autre, et adhérent l'une à l'autre.

Dans l'état de la technique, lors d'une extrusion-soufflage d'une gaine, la gaine est également aplatie mais comprend des agents anti-blockants tels que des charges minérales, et donc ses surfaces intérieures n'adhérent pas entre-elles. Généralement, dans l'état de la technique, la gaine est coupée selon un premier côté ou selon ses deux côtés pour former un film dont la largeur correspond soit à la circonférence de la gaine ou à la moitié de la circonférence.

Dans la présente invention, on profite qu'à la sortie de l'étape d'extrusion-soufflage, la gaine étant aplatie et comprenant un ou des agent(s) adhésif(s) polymérique(s), les troisième et quatrième sous-couches adhèrent entre-elles et sont ainsi thermocollées. On obtient ainsi une bâche comprenant deux films thermocollés entre-eux. De plus, dans la présente invention, trois mélanges sont coextrudés ce qui permet également de fonctionnaliser la bâche dans son épaisseur, tout en ayant une masse surfacique et donc une épaisseur plus importantes.

Le procédé d'extrusion-soufflage est ainsi connu de la personne du métier qui sait le mettre en œuvre. C'est la composition particulière des troisième et quatrième couches exempt de charges minérales et comprenant des agents adhésifs, et la tension longitudinale appliquée, qui permettent la formation de la bâche selon l'invention.

Avantageusement, en sortie de l'étape d'extrusion soufflage, à l'extrémité distale de la gaine extrudée soufflée, notamment de la bulle, les première et seconde couches sont collées entre-elles.

Avantageusement, la gaine extrudée-soufflée comprend des zones supérieure et inférieure entre lesquelles s'étend la direction longitudinale.

Avantageusement, la gaine extrudée soufflée comprend des premier et second bords entre lesquels s'étend la direction transversale, en particulier sensiblement perpendiculaire à la direction longitudinale.

Avantageusement, l'étape d'extrusion-soufflage comprend une étape d'étirage de la gaine au-cours de laquelle une force d'étirage est exercée sur ladite gaine dans la direction longitudinale, en particulier permet la mise à plat de la gaine tubulaire.

Avantageusement, la gaine extrudée-soufflée est une gaine tubulaire.

Avantageusement, la gaine extrudée-soufflée comprend des première et seconde parties longitudinales disposées de part et d'autre d'un plan de coupe longitudinale P passant sensiblement par le centre O et/ou l'axe radial central A de la gaine.

Avantageusement, la gaine extrudée soufflée comprend une première moitié, ou partie, longitudinale dont la largeur est sensiblement égale à la moitié de la circonférence de la gaine à l'état soufflé.

Avantageusement, la gaine extrudée soufflée comprend une seconde moitié, ou partie, longitudinale dont la largeur est sensiblement égale à la moitié de la circonférence de la gaine à l'état soufflé.

Avantageusement, la première moitié comprend, ou correspond à, la première couche.

Avantageusement, la seconde moitié comprend, ou correspond à, la seconde couche.

Les variantes, définitions, et modes de réalisation en référence aux premier, second, troisième et quatrième aspects peuvent être combiné(e)s les uns avec les autres.

### Description des dessins

L'invention sera mieux comprise à la lecture de la description qui suit d'un mode de réalisation de l'invention donné à titre d'exemple non limitatif, en référence aux dessins annexés, sur lesquels :
[Fig. 1] la figure 1 est une représentation schématique vue en coupe d'un premier exemple de bâche de protection plastique selon l'invention;
[Fig. 2] la figure 2 est une représentation schématique vue de côté d'un premier exemple d'une gaine extrudée-soufflée avant le collage entre les première et seconde couches.

### Description d'un mode de réalisation

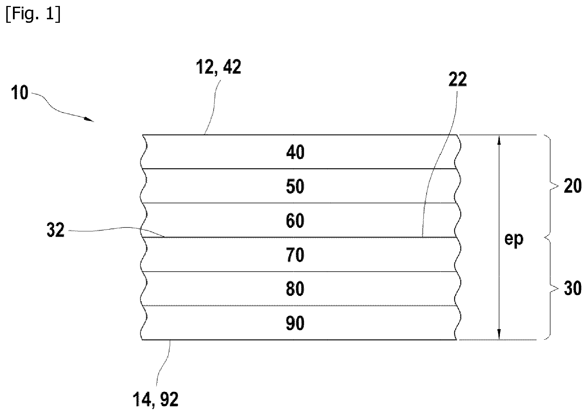

La bâche de protection plastique 10 représentée en coupe sur la figure 1 comprend une première couche 20 et une seconde couche 30 thermocollées selon leurs faces internes 22 et 32.

Avantageusement, la première couche 20 comprend une première sous-couche 40, une seconde sous-couche 50 et une troisième sous-couche 60, qui sont coextrudées ensembles et donc coextensives.

Avantageusement, la seconde couche 30 comprend une quatrième sous-couche 70, une cinquième sous-couche 80 et une sixième sous-couche 90, qui sont coextrudées ensembles et donc coextensives.

La bâche de protection plastique 10 a une première face 12, correspondant à la face externe 42 de la première sous-couche 40, et une seconde face 14 correspondant à la face externe 92 de la sixième sous-couche 90.

La bâche de protection plastique 10 a une épaisseur ep s'étendant entre ses première et seconde faces 12,14.

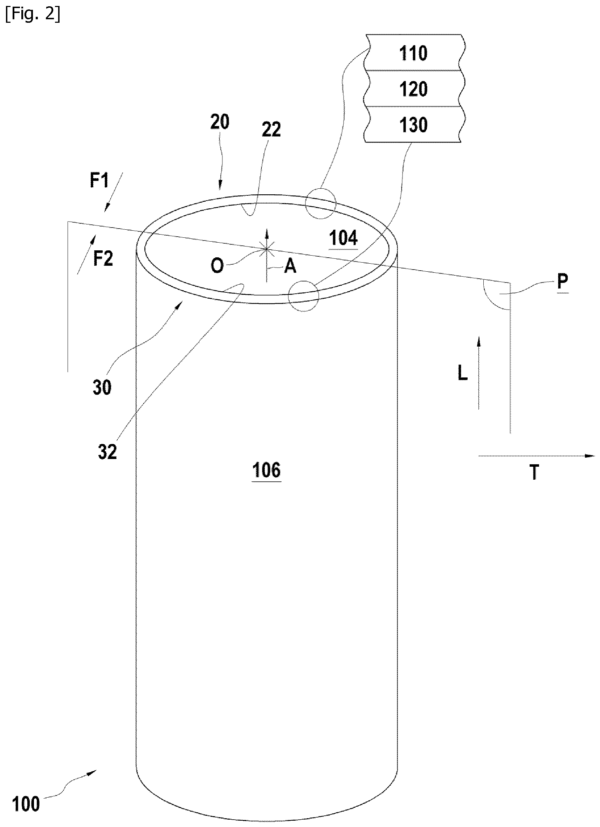

La bâche de protection plastique 10 est obtenue par la mise en œuvre d'un procédé de fabrication comprenant une étape d'extrusion-soufflage d'une gaine 100, représentée schématiquement et partiellement en sortie de l'étape d'extrusion-soufflage avant le collage entre les première et seconde couches 20,30 à la figure 2. L'étape d'extrusion-soufflage comprend l'extrusion de trois mélanges différents à travers une filière cylindrique et creuse en sorte de former ladite gaine 100 creuse se présentant sous la forme d'un tube allongé dont les extrémités distale et proximales, notamment les zones supérieure et inférieure (non représentées pour des raisons de simplification) de la gaine 100, sont maintenues ensembles. Ladite gaine 100 a une direction longitudinale L et une direction transversale T sensiblement perpendiculaire à la direction L. Ladite gaine 100 est étirée et entraînée dans la direction longitudinale L.

Les trois mélanges différents permettent de former trois sous-couches annulaires ou trois strates annulaires (110,120,130). Avantageusement, l'étirage de la gaine 100 entre ses extrémités distale et proximale entraîne la mise à plat de la gaine 100 vers son extrémité distale et ainsi le rapprochement puis le collage des faces intérieures 22 et 32 respectivement des première et seconde couches 20,30.

Avantageusement, le premier mélange permet ainsi d'extruder les première et sixième sous-couches (40,90), le second mélange permet d'extruder les deuxième et cinquième sous-couches (50,80), et le troisième mélange permet d'extruder les troisième et quatrième sous-couches (60,70).

Avantageusement, la première sous-couche annulaire ou première strate annulaire 110 comprend les première et sixième sous-couches (40,90) dans le prolongement l'une de l'autre, et sont rabattues l'une vers l'autre selon les directions des flèches F1 et F2 lors de la mise à plat de la gaine 100.

De même, la seconde sous-couche annulaire ou seconde strate annulaire 120 comprend les deuxième et cinquième sous-couches (50,80), et la troisième sous-couche annulaire ou troisième strate annulaire 130 comprend les troisième et quatrième sous-couches (60,70).

La gaine 100 comprend avantageusement des première et seconde parties longitudinales (104,106) disposées de part et d'autre d'un plan de coupe longitudinale P représenté sur la figure 2 et passant sensiblement par le centre O et l'axe radial central A de la gaine tubulaire 100.

Avantageusement, la première partie longitudinale 104 correspond sensiblement à la première moitié de la gaine 100 et a une largeur égale à environ la moitié de la circonférence de la gaine tubulaire 100.

Avantageusement, la seconde partie longitudinale 106 correspond sensiblement à la seconde moitié de la gaine 100 et a une largeur égale à environ la moitié de la circonférence de la gaine tubulaire 100.

Dans cet exemple précis, la première sous-couche 40 et la sixième sous-couche 90 comprennent chacune la même composition : environ 8,25g de polyéthylène basse densité, 5,25g de carbonate de calcium, 1,5g de dioxyde de titane. Les polyéthylènes A et F sont ainsi identiques. La seconde sous-couche 50 et la cinquième sous-couche 80 comprennent chacune la même composition : environ 21g de polyéthylène basse densité, et 9 g de carbonate de calcium. Les polyéthylènes B et E sont identiques. La troisième sous-couche 60 et la quatrième sous-couche 90 comprennent chacune 3,75g de polyéthylène basse densité (polymères C1 et D1), 1,25g d'un agent adhésif polymérique (ici un élastomère thermoplastique oléfinique à base de polypropylène, type Vistamaax, correspondant à C2 et D2).

Avantageusement, la bâche de protection 10 est sensiblement plane car elle présente une épaisseur ep non significative par rapport à sa longueur ou à sa largeur.

Avantageusement, les faces externes 12,14 de la bâche de protection plastique 10 correspondent aux faces externes 42,92 des première et sixième sous-couches (40,90) qui sont colorées, dans cet exemple précis en blanc. Le dioxyde de titane peut être remplacé par du noir de carbone si l'on souhaite une couleur noire. L'agent colorant (TiO₂) n'est pas présent dans les deuxième à cinquième sous-couches (50,60,7080) ce qui permet d'optimiser sa quantité.

Avantageusement, les troisième et quatrième sous-couches (60,70) comprennent chacune un agent adhésif polymérique (C2, D2) ce qui permet leur collage entre-elles en sortie de la filière d'extrusion-soufflage. Le thermocollage de la gaine 100 sur elle-même est ainsi avantageusement obtenue lors de l'étape d'extrusion soufflage ce qui évite l'utilisation d'un adhésif supplémentaire et externe à la bâche et/ou une étape de thermocollage différente de l'étape d'extrusion soufflage. La bâche 10 obtenue est ainsi plus épaisse et a une masse surfacique plus élevée.

La bâche de protection 10 est avantageusement recyclable car elle comprend très majoritairement des matières thermoplastiques, et ces dernières sont à base d'oléfines ou miscibles avec des polyoléfines dans des procédés de transformation à chaud, notamment d'extrusion soufflage.

Pour cet exemple précis, la bâche de protection 10 a une épaisseur ep d'environ 230 µm et une masse surfacique de 250 g/m². La bâche 10 a une résistance à la rupture supérieure de 49,6 N +/- 1,5N dans la direction longitudinale L, et une résistance à la rupture de 37,3N +/- 1,70N dans la direction transversale T, un module d'élasticité (MPa) de 155N environ à +/-10 N dans les directions longitudinale et transversale (L,T), et un allongement à rupture de 300% +/- 15% dans la direction longitudinale L d'environ 600% +/-50% dans la direction transversale T.

La bâche 10 se maintient sur les surfaces à protéger sans adhésif externe, est souple et épouse ainsi les surfaces à protéger, et ne plisse pas. La bâche 10 présente également de bonnes performances mécaniques dont notamment une bonne résistance à la déchirure sans utiliser de carton ou de renfort textile.

## Revendications

1. Bâche de protection plastique (10) d'une surface, ladite bâche (10) est imperméable à l'eau, **caractérisée en ce que** ladite bâche de protection plastique (10) comprend une ou plusieurs (co)polyoléfines, **en ce que** le rapport de la masse totale de la ou desdites (co)polyoléfines sur la masse totale de ladite bâche de protection (10) est supérieure ou égale à 50%, **en ce que** ladite bâche de protection (10) a une première face (12,42) et une seconde face (14,92), et **en ce que** ladite bâche de protection (10) comprend, au moins, de sa première face (12) vers sa seconde face (14):
- une première sous-couche (40) comprenant au moins une (co)polyoléfine A et au moins une charge minérale, et éventuellement au moins un agent colorant ;
- une seconde sous-couche (50) comprenant au moins une (co)polyoléfine B, et éventuellement au moins une charge minérale,
- une troisième couche (60) comprenant au moins une (co)polyoléfine C1, et éventuellement au moins un agent polymérique adhésif C2,
- une quatrième sous-couche (70) comprenant au moins une (co)polyoléfine D1, et éventuellement au moins un agent polymérique adhésif D2;
- une cinquième sous-couche (80) comprenant au moins une (co)polyoléfine E, et éventuellement au moins une charge minérale,
- une sixième sous-couche (90) comprenant au moins une (co)polyoléfine F et au moins une charge minérale, et éventuellement au moins un agent colorant,
- **en ce que** ladite bâche de protection (10) a une épaisseur supérieure ou égale à 80 µm.

2. Bâche de protection plastique (10) selon la revendication 1, **caractérisée en ce que** les (co)polyoléfines A, B, C1, D1 et E sont des (co)polyéthylènes, notamment des (co)polyéthylènes de basse densité.

3. Bâche de protection plastique (10) selon l'une ou l'autre des revendications 1 et 2, **caractérisée en ce que** le rapport de la masse totale en (co)polyéthylène(s), notamment en (co)polyéthylène(s) de basse densité, sur la masse totale de ladite bâche de protection plastique (10), est supérieur ou égal à 50%, de préférence supérieur ou égal à 60%.

4. Bâche de protection plastique (10) selon l'une quelconque des revendications 1 à 3, **caractérisée en ce que** l'agent adhésif polymérique C2 et/ou l'agent adhésif polymérique D2 est/sont choisi(s) parmi : les élastomères thermoplastiques oléfiniques, en particulier les élastomères à base de propylène ou d'éthylène ou d'un mélange de ces derniers; les (co)polymères d'acétate de vinyle ; les (co)polyoléfines greffées avec des anhydrides maléiques réactifs ; les copolymères d'oléfine(s) et d'acrylate(s) ; ou un mélange de ces derniers.

5. Bâche de protection plastique (10) selon l'une quelconque des revendications 1 à 4, **caractérisée en ce que** le rapport de la masse totale en agent(s) adhésif(s) polymérique(s) comprenant le ou les agent(s) adhésif(s) polymérique(s) C2 et/ou D2, sur la masse totale de ladite bâche de protection plastique (10) est supérieur à 0% et inférieur ou égal à 15%.

6. Bâche de protection plastique (10) selon l'une quelconque des revendications 1 à 5, **caractérisée en ce que** le rapport de la masse totale en charge(s) minérale(s) dans ladite bâche de protection plastique (10) sur la masse totale de ladite bâche de protection plastique (10) est supérieur à 0% et inférieur ou égal à 40%, de préférence supérieur ou égal à 15% et inférieur ou égal à 40%.

7. Bâche de protection plastique (10) selon l'une quelconque des revendications 1 à 6, **caractérisée en ce que** le rapport de la masse totale des troisième et quatrième sous-couches (60,70) sur la masse totale de la bâche de protection plastique (10) est inférieur ou égal à 20%, de préférence inférieur ou égal à 15%.

8. Bâche de protection plastique (10) selon l'une quelconque des revendications 1 à 7, **caractérisée en ce que** le rapport de la masse totale des deuxième et cinquième sous-couches (50,80) sur la masse totale de ladite bâche de protection plastique est supérieur ou égal à 40%.

9. Bâche de protection plastique (10) selon l'une quelconque des revendications 1 à 8, **caractérisée en ce que** le rapport de la masse totale des première et sixième sous-couches (40,90) sur la masse totale de la bâche de protection plastique (10) est supérieur ou égal à 20%, de préférence inférieur ou égal à 50%.

10. Bâche de protection plastique (10) selon l'une quelconque des revendications 1 à 9, **caractérisée en ce que** la bâche de protection plastique (10) comprend des première et seconde couches plastiques (20,30) thermocollées, la première couche plastique (20) comprenant les première, seconde et troisième sous-couches (40,50,60) qui sont co-extrudées, et la seconde couche plastique (30) comprenant les quatrième, cinquième, et sixième sous-couches (70,80,90) qui sont coextrudées.

11. Bâche de protection plastique (10) selon l'une quelconque des revendications 1 à 10, **caractérisée en ce que** les fractions massiques des différentes sous-couches (40,50,60,70,80,90) dans la bâche de protection plastique (10) sont :
- la fraction massique de la première sous-couche (40) est comprise entre 5% et 25%,
- la fraction massique de la seconde sous-couche (50) est comprise entre 20% et 40%,
- la fraction massique de la troisième sous-couche (60) est comprise entre 1% et 10%,
- la fraction massique de la quatrième sous-couche (70) est comprise entre 1% et 10%,
- la fraction massique de la cinquième sous-couche (80) est comprise entre 20% et 40%,
- la fraction massique de la sixième sous-couche (90) est comprise entre 5% et 25%.

12. Bâche de protection plastique (10) selon l'une quelconque des revendications 1 à 11, **caractérisée en ce que** ladite bâche de protection plastique (10) a une épaisseur supérieure ou égale à 200 µm, et de préférence une masse surfacique supérieure ou égale à 200 g/m².

13. Bâche de protection plastique (10) selon l'une quelconque des revendications 1 à 12, **caractérisée en ce que** le rapport de la masse totale en polyéthylène(s) ayant une densité supérieure ou égale à 0,900 et inférieure ou égale à 0,950 sur la masse totale de ladite bâche de protection plastique (10) est supérieur ou égal à 60%.

14. Utilisation d'une bâche de protection plastique (10) selon l'une quelconque des revendications 1 à 13 dans un procédé de fabrication d'une nouvelle bâche de protection plastique (10) d'une surface comprenant au moins 50% en masse d'une ou plusieurs (co)polyoléfine(s), ledit procédé comprenant une étape d'extrusion-soufflage d'un mélange comprenant une ou plusieurs bâche(s) de protection plastique(s) (10) selon l'une quelconque des revendications 1 à 13.

15. Utilisation d'une bâche de protection plastique (10) selon l'une quelconque des revendications 1 à 13 pour la protection, notamment amovible, d'une surface contre les poussières et/ou les projections d'au moins un fluide.

16. Procédé de fabrication d'une bâche de protection plastique (10) d'une surface, notamment selon l'une quelconque des revendications 1 à 13, **caractérisé en ce que** ledit procédé comprend :
- une étape d'extrusion-soufflage d'une gaine (100) comprenant des première et seconde couches (20,30),
- une étape de thermocollage desdites première et secondes couches (20,30) de la gaine (100) entre-elles, en particulier ladite étape de thermocollage comprend une étape de mise à plat de la gaine (100), en sorte de former une bâche de protection plastique (10), **en ce que** ladite bâche de protection plastique (10) est imperméable à l'eau et a une première face (12,42) et une seconde face (14,92), **en ce que** ladite bâche de protection plastique (10) comprend une ou plusieurs (co)polyoléfines, **en ce que** le rapport de la masse totale de la ou desdites (co)polyoléfines sur la masse totale de ladite bâche de protection (10) est supérieure ou égale à 50%, **en ce que** ladite bâche de protection (10) comprend, au moins, de sa première face (12,42) vers sa seconde face (14,92):
- ladite première couche (20) comprenant :
- une première sous-couche (40) comprenant au moins une (co)polyoléfine A et au moins une charge minérale, et éventuellement au moins un agent colorant ;
- une seconde sous-couche (50) comprenant au moins une (co)polyoléfine B, et éventuellement au moins une charge minérale,
- une troisième sous-couche (60) comprenant au moins une (co)polyoléfine C1, et au moins un agent adhésif polymérique C2, et ladite seconde couche (30) comprenant :
- une quatrième sous-couche (70) comprenant au moins une (co)polyoléfine D1, et au moins un agent adhésif polymérique D2;
- une cinquième sous-couche (80) comprenant au moins une (co)polyoléfine E, et éventuellement au moins une charge minérale,
- une sixième sous-couche (90) comprenant au moins une (co)polyoléfine F et au moins une charge minérale, et éventuellement au moins un agent colorant,
- et **en ce que** ladite bâche de protection (10) a une épaisseur supérieure ou égale à 80 µm.
